# EUROPEAN PATENT SPECIFICATION

(11) **EP 2 319 377 B1**
(45) Date of publication and mention of the grant of the patent: **27.06.2012**
(21) Application number: 08805399.6
(22) Date of filing: 06.08.2008
(51) Int. Cl.: A47J 37/07

(54) **ELEMENT AND METHOD FOR A FIRE-LIGHTING SYSTEM**
ELEMENT UND VERFAHREN FÜR EIN FEUERANZÜNDSYSTEM
ÉLÉMENT ET PROCÉDÉ POUR UN SYSTÈME D'ALLUMAGE DU FEU

(43) Date of publication of application: 11.05.2011
(73) Proprietor: Josper, S.a., 08397 Pineda De Mar (ES)
(72) Inventor: JULI SOLER, Pedro, E-08397 Pineda De Mar (ES)
(74) Representative: Ponti Sales, Adelaida
(86) International application number: PCT/ES2008/070155
(87) International publication number: WO 2010/018242

(56) References cited:
- EP-A- 0 186 929
- EP-A- 0 824 886
- DE-U1- 20 303 440

## Description

### FIELD OF THE INVENTION

The present application refers to ovens of the closed barbecue type. Said ovens use combustion of charcoal, wood or any other raw material to grill, warm or cook food providing a double oven and grill function.

### BACKGROUND OF THE INVENTION

For the purposes of the present application, said ovens of the closed barbecue type will be referred to as grill ovens, or grill-ovens.

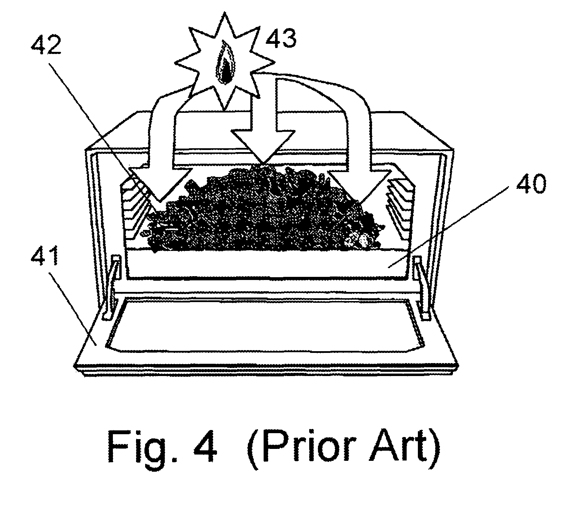

Said grill ovens, see figure 4, are known to operate by a system made of adjustable vents. Air inlets of the vent system typically comprise a number of holes at the lower or at bottom part of the oven. The vent system generates an air draft that goes through the oven. Combustion gases and smoke leave said oven through an outlet preferably at the top part of the oven.

Charcoal or any other suitable combustion material is placed on a combustion rack (40) above the air inlets. Said combustion rack is preferably made of cast-iron grades.

At the front of the oven there is a hinged door (41) for introducing food on one or more grill racks placed above the burning charcoal.

For operating the grill oven, charcoal (42) is introduced inside the oven onto the combustion rack. Charcoal (42) is then piled and a number of firelighters pads (43), typically three, is distributed in said pile.

Firelighters pads (43) are fire igniters. They are made of a light inflammable material that can easily be ignited by a small flame or a single match. Said firelighters pads (43) and their use as fire igniters is known in the field.

A standard lighting method for lighting fire in the oven is depicted in figure 4. Lighting the charcoal (42) normally requires two or three firelighter pads (43). One firelighter pad (43) will be placed at the center of the charcoal pile, while the other two would need to be positioned at the sides of said pile in an orderly fashion. Fire ignition is not an easy task for the operator who must foresee the amount of charcoal present in the grill oven, its piling disposition and determine the number and exact location of said firelighter pads (43) before lighting the fire.

Charcoal (42) will need quite some time to catch fire and start burning. The fire lighting process is traditionally slow. It may also happen that the pads are fully consumed before the charcoal (42) has caught fire. This would require a extra dose of firelighters to be used.

Another disadvantage of the prior art is the uneven distribution of flame power. An uneven arrangement of fire lighting pads (43) may cause that part of the charcoal surface to be ignited will not receive enough flame power.

Document EP 0 186 929 A attempts to tackle to this problem.

The object of the present invention is to overcome at least one of the disadvantages of the prior art.

### SUMMARY OF THE INVENTION

In the present invention an air draft is forced to concentrate on the firelighter pad so as to increases the amount of oxygen that the combustion pad receives. The effect of the above is an enhanced burning pattern on the firelighter pad , which in turn results in a enhanced flame that will quickly ignite the charcoal or other burning material.

The air intake is typically a hole leading into a number of tubes, be it of circular, rectangular or oval cross section shape. Preferably the tubes are distributed in such a matter so as to concentrate onto at least one firelighter pad rack below the combustion grate in a uniform way.

### FIGURES

Figure 1a shows the fire lighting system of the present invention comprising a tube having a an air inlet or intake.
Figure 1b shows the fire lighting system of the present invention comprising a tube connected to an air intake with a door for air draft regulation.
Figure 2a shows an embodiment of the present invention comprising one tube.
Figure 2b shows an embodiment of the present invention comprising two tubes.
Figure 2c shows a embodiment of the invention comprising three tubes.
Figure 2d shows an embodiment of the invention comprising a square crossed section of two tubes.
Figure 3a shows a grill oven with a lower drawer containing the fire lighting system of the invention.
Figure 3b shows a grill oven with a lower drawer containing the fire lighting system of the invention with a drawer in its closed position inside the oven.
Figure 3c shows an oven with a lower drawer containing the fire lighting system of the invention with a drawer in its closed position inside the drawer and a door at the front surface of the drawer for air draft regulation.
Figure 4 shows a grill oven fire lighting system of the prior art that shows a charcoal pile with fire lighting pads.

### DESCRIPTION OF THE PREFERRED EMBODIMENTS

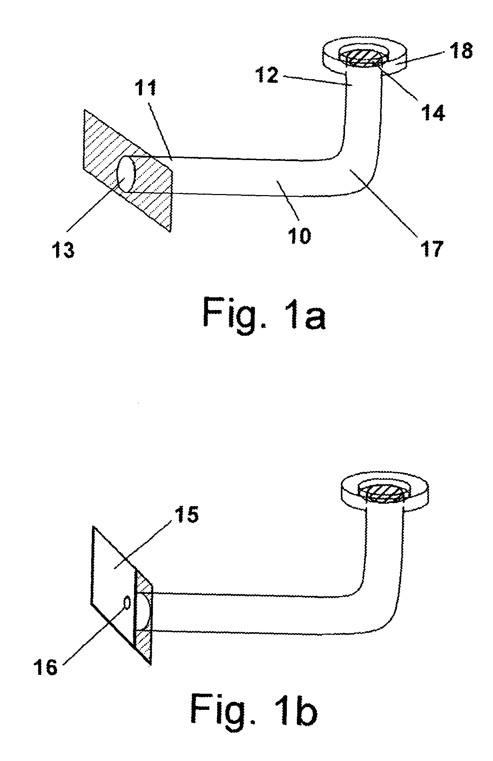

In the embodiment corresponding to figure 1a, a tube (10) is depicted which may have a uniform cross section of circular, rectangular or any other suitable form for allowing air draft circulation. A first end (11) of said tube (10) is attached, welded or built integrally on an air inlet or intake (13) . At the first end (11) of the tube (10) a first part of the tube is arranged in the horizontal direction. At a second end (12) of the tube (10) a vertical part of the tube is arranged, said second end (12) further comprises a support (14) for the fire lighting pad, said support being preferably a grid covering the entire cross section of the tube (10). An elbow joints the horizontal and the vertical parts of the tube.

In the embodiment corresponding to figure 1b, a door (15) is attached to the air inlet of intake (13) for regulating the air draft in the oven. A closed position of said tube will prevent any air draft and stop the combustion process in said grill oven (30). A partially opened door (15) will allow regulation of the vent system.

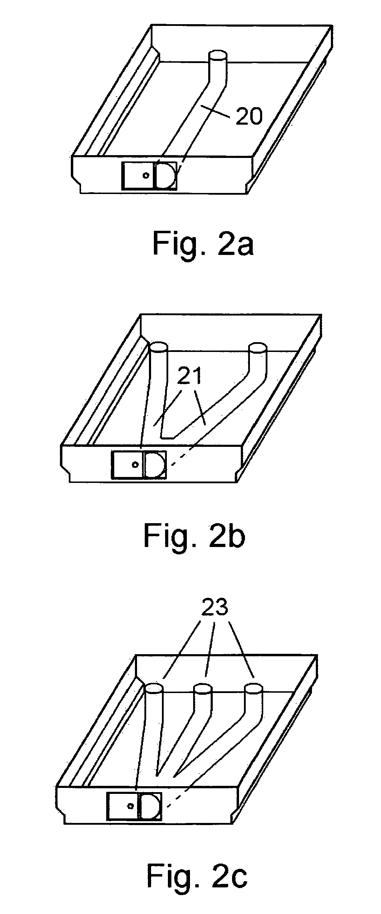

In the embodiment corresponding to figure 2a, a single tube (20) is depicted which may have a uniform cross section of circular, rectangular or any other suitable form for allowing air draft circulation.

Another embodiment, see figure 2b, shows two tubes (21) both connected to the air intake. The air draft is thereby equally divided in two shafts. At the second ends of both tubes a support for the lighting pad is built. The effect of this double tube arrangement is to distribute a fire lighting flame on the surface of a combustion rack (40) with charcoal (42) to be ignited.

In yet another embodiment, see figure 2c, the fire lighting system comprises three tubes (22). This system unexpectedly provides a uniform burning pattern on the combustion grates. Charcoal or other combustion materials will receive an evenly distributed flame and so charcoal will ignite in a uniform pattern in a short time.

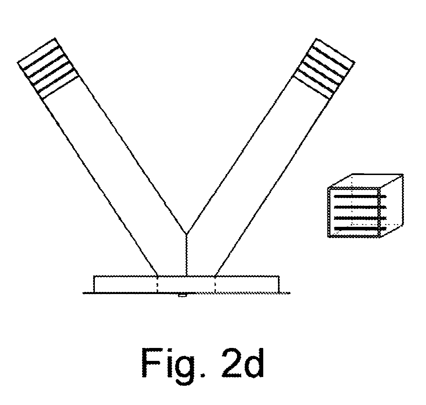

In the embodiment of figure 2d, a rectangular cross section of the tube system is depicted.

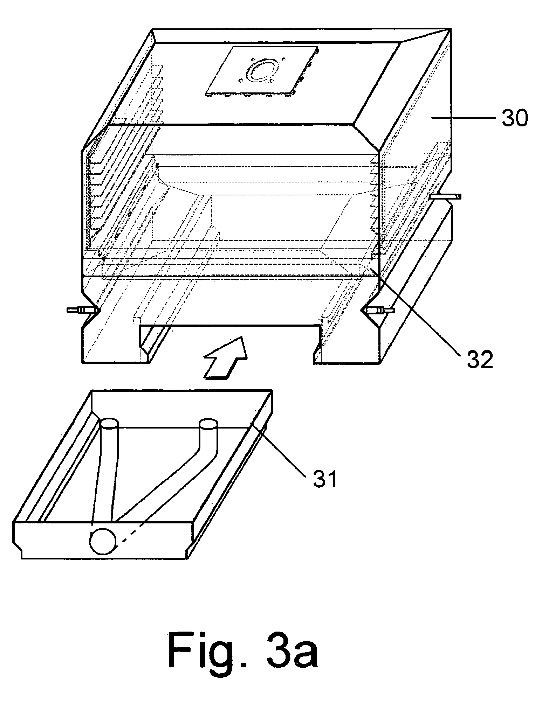

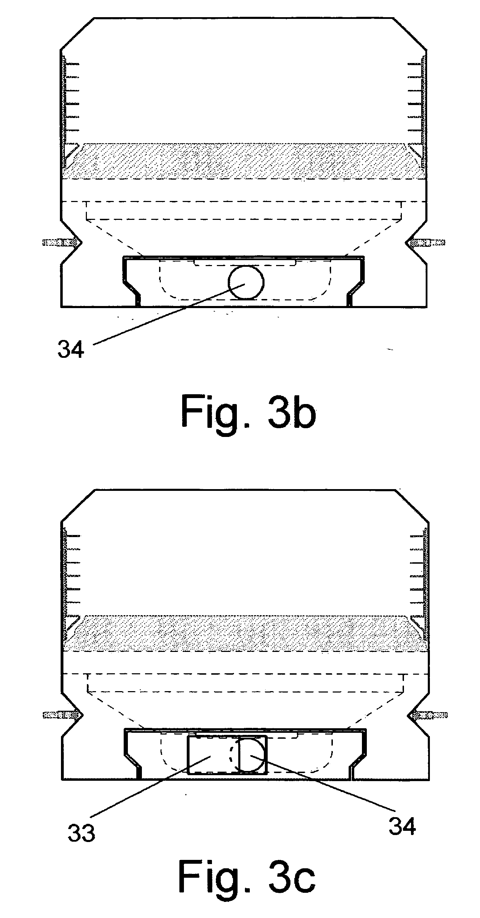

In yet another embodiment, see figure 3, the fire lighting system is attached to an ash box or ash drawer (31) of the grill oven.

Said ash drawer (31) is placed underneath the charcoal grates (32,40). Ashes from the combustion process of the combustion grates will fall onto said ash box (31). Once combustion in the oven is extinguished, the ash box or drawer (31) is removed for cleaning and maintenance. The lower disposition of the ash drawer (31) provides a support frame for the lighting system. Said configuration is particularly advantageous. Known ash boxes do not comprise any lighting arrangement support for the lighting pads. It is standard in the field to exclusively use the inner surface of the drawer as an ash collector. In the present embodiment of the invention, the lighting system is mounted or welded on the ash drawer itself, said ash drawer (31) thus providing physical support. This advantageous disposition requires no extra space within the grill oven (30) for the lighting system.

The ash drawer (31) comprises a front surface with a handle (16) or any other grabbing means for removing said ash drawer (31) from the grill oven (30) and for the subsequent cleaning thereof. The air vent intake of the lighting system is attached to the front surface of the drawer (31). Alternatively in the present embodiment, a number of holes may be perforated on said front surface of the ash drawer (31) and the at least one tube may be attached thereon.

The air inlet or intake (13,34) may comprise means for adjusting the air draft that enters the vent system arranged at the vicinity of the first end (11) of said tube(10). Preferably, said means comprise a door mounted on the front surface of the ash drawer (31). A handle or bolt (16) will open or partially close said door (15) so as to regulate the combustion process in the oven.

Although a door is preferred for regulating the air draft of the grill oven (30), other means achieving the same effect are known to the skilled person.

## Claims

1. Element of a fire lighting system for an grill oven (30) using at least one lighting pad, said element of the fire lighting system comprising an air vent inlet or intake (13), at least one conduit connected to the air vent inlet or intake (13) and configured for guiding an air draft to the at least one lighting pad, **characterized in that** said air conduit comprises at least one tube (10,20,21,23) having a first end (11) connected to the air vent inlet or intake (13) and a second end (12), said second end (12) of said tube (10) having a support (14) configured for placing the at least one lighting pad substantially covering the outlet surface of said second end (12) of said tube (10) so that said air draft is concentrated so as to impinge on said lighting pad.

2. Element of the fire lighting system according to claim 1, wherein said element further comprises an ash box or drawer (31) for said grill oven (30), wherein the air vent inlet or intake (13) is attached or integrally built onto the front surface of said ash drawer (31).

3. Element of the fire lighting system according to claim 2 wherein air draft regulating means (15,33) are arranged on the front surface of the ash drawer (31) for opening or partially closing said air inlets or intakes (13) so as to regulate the combustion process in the grill oven.

4. Element of the fire lighting system according to claim 3 wherein said air draft regulating means is a door (15) comprising a handle or a bolt (16).

5. Oven grill that uses the element of the fire lighting system according to claim 1.

6. Oven grill according to claim 5 wherein the element of the fire lighting system is arranged underneath a combustion material grate (32).

7. Element of the fire lighting system according to claim 1 wherein a first part at the first end (11) of said at least one tube (10) is configured in a horizontal direction and a second part at the second end (12) of said at least one tube (10) is configured in a vertical direction, an elbow (17) part of said at least one tube (10) is arranged so as to extend from the horizontal to the vertical direction.

8. Element of the fire lighting system according to claim 1 wherein said support (14) for said lighting pad has a grid extending over the cross section of said at least one tube (10).

9. Element of the fire lighting system according to claim 8 wherein a rim (18) is arranged around the second end (12) of said at least on tube (10), said rim (18) being configured to provide stable position of the of a lighting pad on said support (14).

10. Element of the fire lighting system according to claim 1 wherein said at least one tube comprises two (21) or three (23) tubes.

11. Method of lighting a fire in an grill oven (30) that uses at least one lighting pad using the element according to claim 1, said method comprising the steps of placing a lighting pad on the support (14) at the second end (13) of the least one tube (10), lighting said fire pad with a small fire or match and positioning the second end (12) of said at least one tube (10) below combustion grates or a combustion rack (32) with a combustion material to be ignited inside said grill oven.

12. Method according to claim 11 wherein the step of placing a lighting pad on the support (14) at the second end (12) of said at least one tube (10) includes opening an ash drawer (31) and the step of positioning the second end (12) of said at least one tube (10) includes closing an ash drawer (31) respectively, wherein the air vent inlet or intake (13,34) of the fire lighting system is attached or integrally built onto the front surface of said ash drawer (31), and said ash drawer (31) is placed inside the grill oven at the lower part of said oven grill.

## Patentansprüche

1. Element eines Feueranzündsystems für einen Grillofen (30), das wenigstens einen Anzündblock verwendet, wobei das Element des Feueranzündsystems einen Belüftungseinlass oder -einlauf (13), wenigstens eine Leitung aufweist, die mit dem Belüftungseinlass oder -einlauf (13) verbunden ist, und gebildet ist, zum Führen eines Luftanzugs zu dem wenigstens einen Anzündblock, **dadurch gekennzeichnet, dass** die Luftleitung wenigstens ein Rohr (10, 20, 21, 23) aufweist, mit einem ersten Ende (11), das mit dem Belüftungseinlass oder -einlauf (13) verbunden ist, und einem zweiten Ende (12), wobei das zweite Ende (12) des Rohres (10) eine Abstützung (14) aufweist, die für das Platzieren des wenigstens einen Anzündblocks ausgebildet ist, der im Wesentlichen die Auslassoberfläche des zweiten Endes (12) des Rohres (10) bedeckt, so dass der Luftanzug konzentriert ist, um so auf den Anzündblock aufzuprallen.

2. Element des Feueranzündsystems nach Anspruch 1, wobei das Element weiterhin einen Aschekasten oder ein Ascheschubfach (31) für den Grillofen (30) aufweist, wobei der Belüftungseinlass oder -einlauf (13) an der Vorderseite des Ascheschubfachs (31) daran befestigt oder einstückig damit ausgebildet ist.

3. Element des Feueranzündsystems nach Anspruch 2, wobei Luftansaugeinstelleinrichtungen (15, 33) an der Vorderseite des Ascheschubfachs (31) angeordnet sind, zum Öffnen oder teilweise Schließen der Lufteinlässe oder - einläufe (13), um den Verbrennungsprozess im Grillofen zu regulieren.

4. Element des Feueranzündsystems nach Anspruch 3, wobei die Luftansaugeinstelleinrichtung eine Tür (15) ist, die einen Handgriff oder einen Bolzen (16) aufweist.

5. Ofengrill der das Element des Feueranzündsystems nach Anspruch 1 verwendet.

6. Ofengrill nach Anspruch 5, wobei das Element des Feueranzündsystems unterhalb des Gitterrostes (32) des Verbrennungsmaterials angeordnet ist.

7. Element des Feueranzündsystems nach Anspruch 1, wobei ein erster Abschnitt an dem ersten Ende (11) des wenigstens einen Rohres (10) in einer horizontalen Richtung ausgebildet ist, und ein zweiter Abschnitt an dem zweiten Ende (12) des wenigstens einen Rohres (10) in einer vertikalen Richtung ausgebildet ist, wobei ein Ellenbogenabschnitt (17) des wenigstens einen Rohres (10) so angeordnet ist, dass er sich von der horizontalen in die vertikale Richtung erstreckt.

8. Element des Feueranzündsystems nach Anspruch 1, wobei die Abstützung (14) des Anzündblocks ein Gitter aufweist, das sich über den Querschnitt des wenigstens einen Rohres (10) erstreckt.

9. Element des Feueranzündsystems nach Anspruch 8, wobei ein Rand (18) um das zweite Ende (12) des wenigstens einen Rohres (10) angeordnet ist, wobei der Rand (18) so ausgebildet ist, dass er eine stabile Position des Anzündblocks auf der Abstützung (14) schafft.

10. Element des Feueranzündsystems nach Anspruch 1, wobei das wenigstens eine Rohr zwei (21) oder drei (23) Rohre aufweist.

11. Verfahren zum Anzünden eines Feuers in einem Grillofen (30), das wenigstens einen Anzündblock verwendet, der das Element nach Anspruch 1 verwendet, wobei das Verfahren die Schritte aufweist: Platzieren eines Anzündblocks auf der Abstützung (14) am zweiten Ende (13) des wenigstens einen Rohres (10), Anzünden des Feuerblocks mit einem kleinen Feuer oder Zündholz und Positionieren des zweiten Endes (12) des wenigstens einen Rohres (10) unterhalb von Verbrennungsrosten oder einer Verbrennungsablage (32) mit einem Verbrennungsmaterial, das innerhalb des Grillofens angezündet werden soll.

12. Verfahren nach Anspruch 11, wobei der Schritt des Platzierens eines Anzündblockes auf die Abstützung (14) an dem zweiten Ende (12) des wenigstens einen Rohres (10), das Öffnen eines Ascheschubfaches (31) umfasst, und der Schritt des Positionierens des zweiten Endes (12) des wenigstens einen Rohres (10), das entsprechend Schließen eines Ascheschubfachs (31) umfasst, wobei der Belüftungseinlass oder -einlauf (13, 34) des Feueranzündsystems an der Vorderseite des Ascheschubfachs (31) befestigt oder mit diesem einstückig ausgebildet ist, und das Ascheschubfach (31) in dem Grillofen am unteren Abschnitt des Ofengrills platziert ist.

## Revendications

1. Élément d'un système d'allumage de feu pour un four à gril (30) utilisant au moins une pastille d'allumage, l'élément du système d'allumage de feu comprenant une entrée ou admission (13) d'air d'aération, au moins un conduit raccordé à l'entrée ou admission (13) d'air d'aération et configuré pour guider de l'air aspiré vers la au moins une pastille d'allumage, **caractérisé en ce que** le conduit d'air comprend au moins un tube (10, 20, 21, 23) ayant une première extrémité (11) raccordée à l'entrée ou admission (13) d'air d'aération et une seconde extrémité (12), la seconde extrémité (12) du tube (10) ayant un support (14) configuré pour mettre la au moins une pastille d'allumage recouvrant sensiblement la surface de sortie de la seconde extrémité (12) du tube (10) de sorte que l'air aspiré est concentré de manière à venir heurter la pastille d'allumage.

2. Élément du système d'allumage de feu selon la revendication 1, dans lequel l'élément comprend de plus une boîte ou tiroir à cendres (30) pour le four à gril (30), dans lequel l'entrée ou admission (13) d'air d'aération est fixée sur la surface avant du tiroir à cendres (31), ou construite en un seul bloc avec celle-ci.

3. Élément du système d'allumage de feu selon la revendication 2, dans lequel des moyens de régulation de l'air aspiré (15, 33) sont agencés sur la surface avant du tiroir à cendres (30) pour ouvrir ou fermer partiellement les entrées ou admissions d'air (13) de manière à réguler le processus de combustion dans le four à gril.

4. Élément du système d'allumage de feu selon la revendication 3, dans lequel les moyens de régulation d'air aspiré sont constitués d'une porte (15) comprenant une poignée ou un boulon (16).

5. Gril de four qui utilise l'élément du système d'allumage de feu selon la revendication 1.

6. Gril de four selon la revendication 5, dans lequel l'élément du système d'allumage de feu est agencé en dessous d'une grille pour matériau de combustion (32).

7. Élément du système d'allumage de feu selon la revendication 1, dans lequel une première partie située au niveau de la première extrémité (11) du au moins un tube (10) est configurée dans une direction horizontale et une seconde partie située à la seconde extrémité (12) du au moins un tube (10) est configurée dans une direction verticale, une partie de coude (17) du au moins un tube (10) étant agencée de manière à s'étendre depuis la direction horizontale vers la direction verticale.

8. Élément du système d'allumage de feu selon la revendication 1, dans lequel le support (14) de la pastille d'allumage a une grille s'étendant sur la section transversale du au moins un tube (10).

9. Élément du système d'allumage de feu selon la revendication 8, dans lequel un rebord (18) est agencé autour de la seconde extrémité (12) du au moins un tube (10), le rebord (18) étant configuré pour fournir une position stable de la pastille d'allumage sur le support (14).

10. Élément du système d'allumage de feu selon la revendication 1, dans lequel le au moins un tube comprend deux (21) ou trois (23) tubes.

11. Procédé d'allumage d'un feu dans un four à gril (30) qui utilise au moins une pastille d'allumage utilisant l'élément selon la revendication 1, le procédé comprenant les étapes consistant à mettre une pastille d'allumage sur le support (14) au niveau de la seconde extrémité (13) du au moins un tube (10), allumer la pastille d'allumage de feu avec un petit feu ou une allumette et positionner la seconde extrémité (12) du au moins un tube (10) en dessous de grilles de combustion ou d'une clayette de combustion (32) ayant un matériau de combustion à allumer à l'intérieur du four à gril.

12. Procédé selon la revendication 11, dans lequel l'étape consistant à mettre une pastille d'allumage sur le support (14) au niveau de la seconde extrémité (12) du au moins un tube (10) comprend l'ouverture d'un tiroir à cendres (31) et l'étape consistant à positionner la seconde extrémité (12) du au moins un tube (10) comprend la fermeture d'un tiroir à cendres (31) respectivement, l'entrée ou admission d'air d'aération (13, 34) du système d'allumage de feu étant fixée sur la surface avant du tiroir à cendres (31), ou construite d'un seul tenant avec celle-ci et le tiroir à cendres (31) est placé à l'intérieur du four à gril au niveau de la partie inférieure du gril du four.
